(19) **Europäisches Patentamt**

**European Patent Office**

**Office européen des brevets**

(11) **EP 0 704 703 B1**

(12) **EUROPÄISCHE PATENTSCHRIFT**

(45) Veröffentlichungstag und Bekanntmachung des Hinweises auf die Patenterteilung:
**26.02.2003   Patentblatt 2003/09**

(51) Int Cl.[7]: **G01P 3/50**, G01P 3/00

(21) Anmeldenummer: **95111922.1**

(22) Anmeldetag: **28.07.1995**

(54) **Verfahren zur Ermittlung der Geschwindigkeit eines Rades bei Kraftfahrzeugen**

Method for determining the wheel speed of a vehicle

Procédé pour déterminer la vitesse d'une roue d'une voiture

(84) Benannte Vertragsstaaten:
**DE ES FR GB IT SE**

(30) Priorität: **27.09.1994   DE 4434480**

(43) Veröffentlichungstag der Anmeldung:
**03.04.1996   Patentblatt 1996/14**

(73) Patentinhaber: **Bayerische Motoren Werke Aktiengesellschaft**
**80788 München (DE)**

(72) Erfinder:
• **Roppenecker, Günter, Dr.**
**D-80992 München (DE)**

• **Herb, Eugen**
**D-80798 München (DE)**
• **Boettcher, Uwe**
**D-82110 Germering (DE)**

(56) Entgegenhaltungen:
**EP-A- 0 552 435          DE-A- 4 140 239**
**US-A- 4 989 922**

• **TSUMURA T ET AL: "AN EXPERIMENTAL SYSTEM FOR SELF-CONTAINED POSITION AND HEADING MEASUREMENT OF GROUND VEHICLE" PROCEEDINGS OF THE INTERNATIONAL CONFERENCE ON ADVANCED ROBOTICS, Bd. 1, 1.Januar 1983, Seiten 269-276, XP000566234**

EP 0 704 703 B1

**Beschreibung**

Die Erfindung bezieht sich auf ein Verfahren zur Ermittlung der Geschwindigkeit eines Rades bei Kraftfahrzeugen nach dem Oberbegriff des einzigen Patentanspruchs.

Allgemein ist bekannt, dass aufgrund von physikalischen Zusammenhängen die Geschwindigkeit eines Rades durch die Multiplikation der Radwinkelgeschwindigkeit bzw. der Raddrehzahl mit dem dynamischen Radhalbmesser berechnet werden kann. In der DE 39 12 014 A wird beispielsweise die Fahrzeuggeschwindigkeit durch den Mittelwert der Radgeschwindigkeiten der vorderen nicht angetriebenen Achse eines Kraftfahrzeuges berechnet. Hierbei ist beispielsweise die Radgeschwindigkeit des vorderen rechten Rades die Multiplikation der Winkelgeschwindigkeit des vorderen rechten Rades mit dem dynamischen Radhalbmesser als Konstantwert. Anstelle der Winkelgeschwindigkeit kann auch gleichbedeutend die Drehzahl eines Rades verwendet werden. Der dynamische Radhalbmesser wird üblicherweise aus dem Abrollumfang des schlupffrei geradeaus rollenden Rades bestimmt. Ein konstant angenommener dynamische Radhalbmesser, der sich in der Realität in Abhängigkeit vom Betriebszustand des Kraftfahrzeuges ändert, führt insbesondere bei Berechnungen von querdynamischen Betriebsgrössen des Kraftfahrzeugs teilweise zu erheblichen Fehlberechnungen.

Aus dem Artikel: "An Experimental System for Self-contained Position and Heading Measurement of Ground Vehicle" in "Proceedings of the International Conference on Advanced Robotics", Bd. 1, 1. Januar 1983, S. 269-276, ist ein Verfahren der eingangs genannten Art bekannt, bei zur genauen Berechnung des dynamischen Radhalbmessers der der momentanen Reifenein- bzw. Reifenausfederung entsprechende Korrekturwert in Abhängigkeit von der Einfederung der Radaufhängung bestimmt wird. Die Ermittlung einer Einfederung der Radaufhängung erfordert zum einen eine Messung mittels Sensoren und ist zum anderen kein eindeutiges Mass für eine querdynamische Betriebsgrösse; denn eine Einfederung der Radaufhängung tritt auch bei Geradeausfahrt auf unebener Strecke auf.

Es ist Aufgabe der Erfindung, die Ermittlung der Geschwindigkeit eines Rades bei Kraftfahrzeugen der eingangs genannten Art sowohl hinsichtlich der erzielten Genauigkeit zu verbessern als auch den konstruktiven Aufwand hierfür zu verringern.

Diese Aufgabe wird durch die kennzeichnenden Merkmale des Patentanspruchs gelöst.

Erfindungsgemäss wird der der momentanen Reifenein- und ausfederung entsprechende Korrekturwert in Abhängigkeit von einer querdynamischen Betriebsgrösse berechnet. Es kann angenommen werden, dass die Radlaständerung sich beispielsweise nahezu proportional zur Querbeschleunigung verhält. Somit kann auf zusätzliche Sensoren zur Radlastmessung verzichtet werden.

Bei der querdynamischen Betriebsgrösse handelt es sich vorzugsweise um die Querbeschleunigung.

Das erfindungsgemässe Verfahren wird bei der Berechnung von querdynamischen Betriebsgrössen verwendet. Die querdynamischen Betriebsgrössen werden z.B. in Abhängigkeit von der Differenz und/oder dem Mittelwert der Radgeschwindigkeiten einer Achse ermittelt. Derartige querdynamische Betriebsgrössen sind insbesondere die Giergeschwindigkeit, die Bahnkrümmung, der Lenkwinkel, der Schwimmwinkel oder auch die Querbeschleunigung. Da derartige querdynamische Betriebsgrössen beispielsweise für sicherheitsbezogene Kraftfahrzeugsysteme, wie z.B. Antriebsschlupfregelsysteme oder Dämpferkontrollsysteme, benötigt werden, ist eine hohe Berechnungsgenauigkeit erforderlich, die sich ohne Berücksichtigung der Reifenein- bzw. Reifenausfederung nicht erzielen lässt. Der der momentanen Reifenein- bzw. Reifenausfederung entsprechende Korrekturwert, die Radlaständerung oder ausgewählte querdynamische Betriebsgrössen können berechnet werden.

In der Zeichnung ist ein Ausführungsbeispiel der Erfindung dargestellt. Es zeigt

Fig. 1 ein Rad eines Kraftfahrzeuges, bei dem der Konstantwert des dynamischen Radhalbmesser vereinfacht als Abstand zwischen dem Radmittelpunkt und der Fahrbahnoberfläche eingezeichnet ist,

Fig. 2 ein Rad eines Kraftfahrzeuges, bei dem gegenüber dem Konstantwert des dynamischen Radhalbmessers eine Reifeneinfederung vorliegt,

Fig. 3 ein Rad eines Kraftfahrzeuges, bei dem gegenüber dem Konstantwert des dynamischen Radhalbmessers eine Reifenausfederung vorliegt, und

Fig. 4 ein Blockschaltbild, in dem in Abhängigkeit von den Raddrehzahlen einer Achse unter Zuhilfenahme des erfindungsgemässen Verfahrens verschiedene querdynamische Betriebsgrössen ermittelt werden.

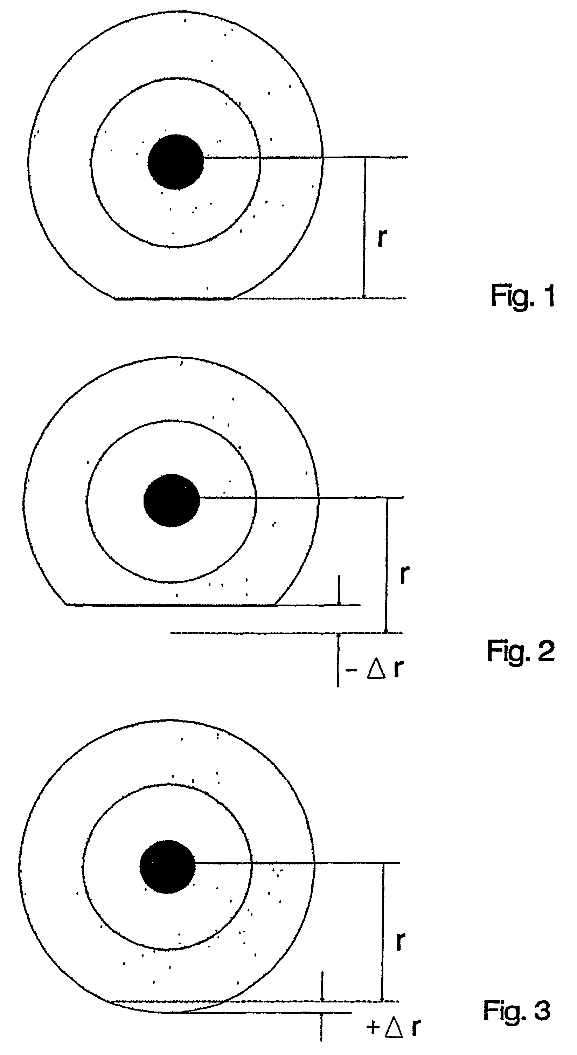

In den Fig. 1 bis 3 ist ein Kraftfahrzeugrad dargestellt, bestehend aus einer Radnabe, einer Radfelge und einem Reifen. Fig. 1 stellt ein Kraftfahrzeugrad dar, bei dem der Konstantwert des dynamischen Radhalbmessers r gezeigt ist, der bei bestimmten definierten Betriebsbedingungen, wie z.B. bei Geradeausfahrt und glatter Fahrbahn, im Mittel vorliegt. Dieser Konstantwert r des dynamischen Radhalbmessers wird z.B. fahrzeugspezifisch empirisch ermittelt und in den Speicher eines Steuergerätes, das die Geschwindigkeit eines Rades bzw. querdynamische Betriebsgrössen ermittelt, abgespeichert.

Fig. 2 zeigt eine Reifeneinfederung gegenüber dem Konstantwert r des dynamischen Radhalbmessers, wodurch sich ein negativer Korrekturwert - $\Delta$ r er-

gibt. Somit wird zur Ermittlung der Geschwindigkeit des Rades der dynamische Radhalbmesser $r_{dyn}$ durch die Addition des Konstantwertes und des negativen Korrekturwertes gebildet: $r_{dyn} = r+(-\Delta r)$.

Fig. 3 zeigt eine Reifenausfederung gegenüber dem Konstantwert r des dynamischen Radhalbmessers. Diese Reifenausfederung führt zu dem positiven Korrekturwert $+\Delta r$. Somit ergibt sich ein dynamischer Radhalbmesser $r_{dyn}$ aus der Addition des Konstantwertes und des positiven Korrekturwertes: $r_{dyn} = r+(+\Delta r)$.

Die momentane Reifenein- bzw. Reifenausfederung bzw. der der momentanen Reifenein- bzw. Reifenausfederung entsprechende Korrekturwert wird erfindungsgemäss in Abhängigkeit von der Querbeschleunigung als querdynamischer Betriebsgrösse berechnet.

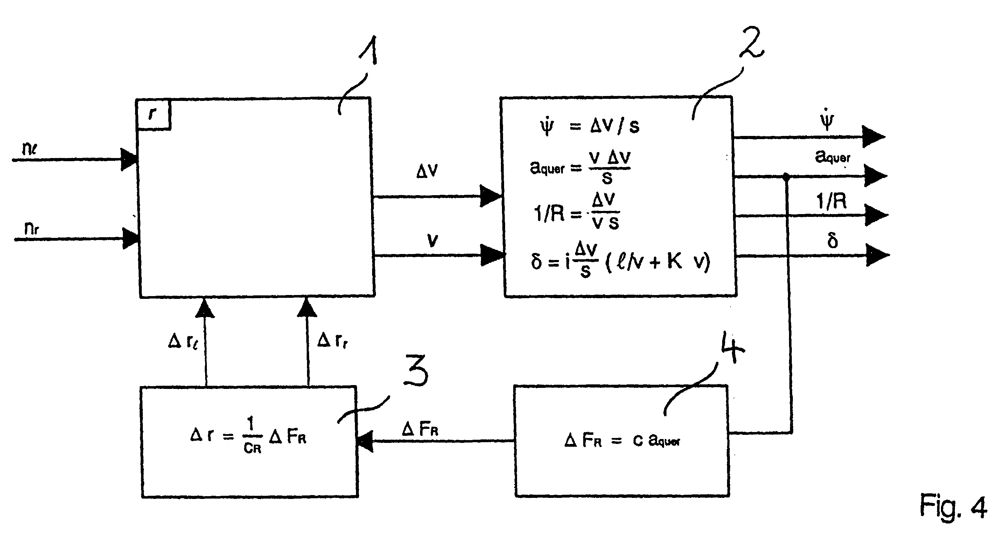

In Fig. 4 ist die Verwendung des erfindungsgemässen Verfahrens zur Berechnung von querdynamischen Betriebsgrössen in Kraftfahrzeugen dargestellt. In Fig. 4 sind vier Funktionseinheiten 1, 2, 3 und 4, die beispielsweise in einem Steuergerät eines Kraftfahrzeuges enthalten sind, vorgesehen. Die Funktionseinheit 1 erhält als Eingangssignale die Raddrehzahl $n_l$ des linken Rades und die Raddrehzahl $n_r$ des rechten Rades, vorzugsweise der nicht-angetriebenen vorderen Achse, den der momentanen Reifenein- bzw. Reifenausfederung des linken Rades entsprechenden Korrekturwert $\Delta r_l$ und den der momentanen Reifenein- bzw. Reifenausfederung des rechten Rades entsprechenden Korrekturwert $\Delta r_r$.

Darüber hinaus ist der Konstantwert r des dynamischen Radhalbmessers in der Funktionseinheit 1 abgespeichert. Die Ausgangssignale der Funktionseinheit 1 sind die Differenz $\Delta v$ und der Mittelwert v der Geschwindigkeiten des vorderen linken Rades und des vorderen rechten Rades.

Die Differenz $\Delta v$ und der Mittelwert v der Geschwindigkeiten des linken und des rechten Rades der nichtangetriebenen Achse sind Eingangssignale der Funktionseinheit 2. Weiterhin liegen in der Funktionseinheit 2 als Informationen die Spurweite s, die Gesamtlenkübersetzung i und eine Konstante K, die von der Fahrzeugmasse, der Schräglaufsteife der Vorder- und Hinterachse sowie dem Radstand, dem Abstand des Schwerpunkts von der Vorderachse und dem Abstand des Schwerpunkts von der Hinterachse abhängt, vor. Ausgangssignale der Funktionseinheit 2 sind die Giergeschwindigkeit, die Querbeschleunigung $a_{quer}$, die Bahnkrümmung 1/R und der Lenkwinkel $\delta$.

Die Querbeschleunigung $a_{quer}$ wird als Eingangssignal der Funktionseinheit 4 zugeführt, deren Ausgangssignal die Radlaständerung $\Delta F_R$ ist.

Die Radlaständerung $\Delta F_R$ ist Eingangssignal der Funktionseinheit 3, in der weiterhin die Reifenfederkonstante $c_R$ als Information vorliegt. Die Korrekturwerte $\Delta r_l$ und $\Delta r_r$ werden von der Funktionseinheit 3 an die Funktionseinheit 1 übergeben.

Anhand von Fig. 4 wird das erfindungsgemässe Verfahren zur Berechnung von den querdynamischen Betriebsgrössen Gierwinkelgeschwindigkeit, Querbeschleunigung $a_{quer}$, Bahnkrümmung 1/R und Lenkwinkel $\delta$ am Beispiel einer Kurvenfahrt beschrieben. Zur Vereinfachung wird angenommen, dass die momentane Reifeneinfederung und die momentane Radlaständerung (Radlastzunahme) des Rades der einen Seite gleich der momentanen Reifenausfederung und der momentanen Radlaständerung (Radlastabnahme) des Rades der anderen Seite der Vorderachse ist. Somit ist der Betrag des der momentanen Reifenein- und Reifenausfederung entsprechenden Korrekturwertes gleich: $|\Delta r_l| = |\Delta r_r| = |\Delta r|$. Somit würde lediglich die Übergabe eines Korrekturwertes $\Delta r$ anstelle der beiden Korrekturwerte $\Delta r_l$ und $\Delta r_r$ von der Funktionseinheit 3 an die Funktionseinheit 1 ausreichen.

Bei der Beschreibung des erfindungsgemässen Verfahrens anhand von Fig. 4 wird von einer Rechtskurve ausgegangen. Bei einer Rechtskurve erfolgt bezogen auf den Konstantwert r des dynamischen Radhalbmessers am linken Rad eine momentane zusätzliche Reifeneinfederung $\Delta r_l = -\Delta r$. Gleichzeitig erfährt das rechte Rad eine Reifenausfederung, wodurch für das rechte Rad der Korrekturwert $\Delta r_r = +\Delta r$ gewählt wird. Im Falle einer Rechtskurve ergibt sich demnach für die Differenz $\Delta v$ der Radgeschwindigkeiten der Vorderachse folgende Formel:

$$\Delta v=(r+\Delta r_r)*n_r-(r+\Delta r_l)n_l$$

bzw.

$$\Delta v=(r+\Delta r)*n_r-(r-\Delta r)n_l$$

Diese Differenz $\Delta v$ der Radgeschwindigkeiten einer Achse ist Grundlage für die Berechnung der querdynamischen Betriebsgrössen, die die Ausgangssignale der Funktionseinheit 2 bilden. Die Formeln zur Berechnung dieser querdynamischen Betriebsgrössen sind in der Funktionseinheit 2 der Fig. 4 dargestellt. Hierbei ist s die Spurweite, i die gesamte Lenkübersetzung, v die Fahrzeuggeschwindigkeit, die z.B. als Mittelwert der erfindungsgemäss bestimmten Radgeschwindigkeiten gebildet wird, I der Radstand und K die oben beschriebene Konstante. Die berechneten querdynamischen Betriebsgrössen Gierwinkelgeschwindigkeit, Querbeschleunigung $a_{quer}$, Bahnkrümmung 1/R und Lenkwinkel $\delta$ können für verschiedene Fahrzeugsysteme, wie z.B. für ein Antiblockiersystem, für ein Antriebsschlupfregelsystem, für ein Lenkwinkelredundanzsystem, für ein elektronisches Dämpferkontrollsystem oder für ein Navigationssystem als Eingangsgrössen der Steuer- bzw. Regellogik oder zur Messgrössenüberwachung verwendet werden.

Vorzugsweise wird gemäss Fig. 4 beispielsweise die Querbeschleunigung $a_{quer}$ oder auch eine andere dynamische Betriebsgrösse zur Berechnung der Radlaständerung $\Delta F_R$ eingesetzt. In der Funktionseinheit 4 wird die Radlaständerung $\Delta F_R$ durch die Multiplikation der Querbeschleunigung $a_{quer}$ mit einer Proportionalitätskonstante c ermittelt. Die so berechnete Radlaständerung $\Delta F_R$ wird an die Funktionseinheit 3 weitergegeben, in der wiederum durch Multiplikation dieser Radlaständerung $\Delta F_R$ mit dem Reziprokwert der Reifenfederrate $c_R$ der der momentanen Reifenein- bzw. Reifenausfederung entsprechende Korrekturwert $\Delta r$ bzw. $\Delta r_l$ und $\Delta r_r$ berechnet wird. Wird eine besonders hohe Genauigkeit an die Ermittlung der querdynamischen Betriebsgrössen bzw. der Geschwindigkeit eines Rades gestellt, ist es auch möglich anstelle der Berechnung des Korrekturwertes und/oder der Radlaständerung und/oder der Querbeschleunigung eine Ermittlung dieser Grössen durch geeignete Sensoren durchzuführen.

**Patentansprüche**

1. Verfahren zur Ermittlung der Geschwindigkeit eines Rades bei Kraftfahrzeugen in Abhängigkeit vom dynamischen Radhalbmesser, wobei der dynamische Radhalbmesser aus der Addition eines Konstantwertes (r) und eines der momentanen Reifenein- bzw. Reifenausfederung entsprechenden Korrekturwertes ($\Delta r$; $\Delta r_l$, $\Delta r_r$) gebildet wird, **dadurch gekennzeichnet, dass** der der momentanen Reifenein- bzw. Reifenausfederung entsprechende Korrekturwert ($\Delta r$; $\Delta r_l$, $\Delta r_r$) in Abhängigkeit von einer berechneten querdynamischen Betriebsgrösse ($a_{quer}$) berechnet wird.

2. Verfahren nach Patentanspruch 1, **gekennzeichnet durch** die Berechnung der Querbeschleunigung als querdynamischer Betriebsgrösse.

**Claims**

1. A method for determining the speed of a wheel in motor vehicles depending upon the dynamic wheel radius, in which the dynamic wheel radius is formed by the addition of a constant value (r) and a correction value ($\Delta r$; $\Delta r_l$; $\Delta r_r$) corresponding to the momentary tyre compression or expansion, **characterised in that** the correction value ($\Delta r$; $\Delta r_l$; $\Delta r_r$) corresponding to the momentary tyre compression or expansion is calculated dependent upon a calculated transverse dynamic operating variable ($a_{quer}$).

2. A method according to Claim 1, **characterised in that**, as the transverse dynamic operating variable, the lateral acceleration is calculated.

**Revendications**

1. Procédé pour déterminer la vitesse d'une roue d'un véhicule automobile en fonction du rayon de roue dynamique selon lequel on forme le rayon de roue dynamique par l'addition d'une valeur constante (r) et d'une valeur de correction ($\Delta r$, $\Delta r_l$, $\Delta r_r$) correspondant au mouvement de suspension instantanée (compression / extension), **caractérisé en ce que** on calcule la valeur de correction ($\Delta r$, $\Delta r_l$, $\Delta r_r$) correspondant au mouvement de suspension instantané pneumatique (compression / extension) en fonction d'un paramètre de dynamique transversale $a_{quer}$ calculé.

2. Procédé selon la revendication 1, **caractérisé par** le calcul de l'accélération transversale comme paramètre de dynamique transversale.

Fig. 1

Fig. 2

$- \triangle r$

Fig. 3

$+ \triangle r$

Fig. 4